# EUROPEAN PATENT SPECIFICATION

(11) **EP 1 477 533 B1**
(45) Date of publication and mention of the grant of the patent: **22.12.2010**
(21) Application number: 04019376.5
(22) Date of filing: 25.11.1999
(51) Int. Cl.: C09D 5/02, C09D 7/14, C09D 5/29, B05D 5/06, B05D 3/00

(54) **Process for application of an aqueous phase paint product**
Verfahren zum Aufbringen eines wässrigen Anstrichmittels
Procédé d' application d' une peinture en phase aqueuse

(30) Priority: 27.11.1998 IT TO980997
(43) Date of publication of application: 17.11.2004
(62) Divisional of application: 99123497.2
(73) Proprietor: Candis S.r.l., 10123 Torino (IT)
(72) Inventor: Gilli, Alberto, 10020 Andezeno (Torino) (IT)
(74) Representative: Freyria Fava, Cristina

(56) References cited:
- EP-A- 0 505 664
- EP-A- 0 554 225
- US-A- 4 376 654

## Description

The present invention relates to an aqueous phase paint product and more specifically, to a process for its application.

Paint products are known which allow multicoloured or flecked wall coatings to be obtained called "Venetian stucco", "lime finish" "false marble" and the like. Such known products have a composition based essentially on slaked lime.

In order for these known products, once applied, to produce the desired aesthetic effect, the surface to be painted must be perfectly prepared and the product must be applied in several accurately superimposed coats one over the other with a possible final wax finishing. The procedure for application of known products is thus lengthy and complex.

EP 0 554 225 discloses an aqueous coating composition comprising one or more coloured floccules.

For the purpose of overcoming this disadvantage, the present invention provides a process for an aqueous phase paint product comprising the steps of i) preparing an aqueous neutral base containing white flocculi, ii) preparing an aqueous coloured base, iii) mixing the aqueous neutral base with the aqueous coloured base, iv) applying that product to a surface to be decorated by means of a brush, v) smoothing the decorated surface.

The neutral base of the paint product of the invention contains white monochromatic flocculi in aqueous solution which confer on the final decoration white flecking and shadows, thus making it assume an antique and non-uniform aspect.

The mixture of the neutral base with one or more coloured bases, moreover, allows the final paint product - which is easily applicable in a single coat by brush and then smoothed - to assume the desired coloured speckling.

This easy applicability is due to the fact that the flocculi present in the neutral base are rather fragile so as not to streak the final decoration when this is smoothed but not so fragile as completely to disappear from the decoration when stressed, by shear forces. In particular such white flocculi have the property of gradually breaking up when stressed in such a way as to create a graduation in the final colour given by the mixture between the white of the neutral base and the colour of the coloured base.

The aqueous neutral base is obtainable from mixture of a first solution with a second solution so as to give an intermediate product and subsequent mixture of this intermediate product with a third solution.

Preferably, the first solution comprises at least the following ingredients expressed in parts by weight - as also, in the absence of indication otherwise, in all the other formulations recorded:

| | |
|---|---|
| non-ionic colloid | from 0.5 to 13 |
| anti-foaming agent | from 0.1 to 2 |
| bactericide | from 0.07 to 1.5 |
| white pigment | from 0.5 to 25 |
| calcium carbonate | from 1 to 5 |
| ethylene glycol | from 0.5 to 7 |
| water | q.s. to 100 parts by weight |

Colloids which are soluble, but not ionisable in water are preferred as non-ionic colloid, and are of glycoside type, called "galactomannans".

The anti-foaming agent can be, for example, chosen from mineral paraffin oils in combination with polyalkoxyethers or emulsions of silicone polymers.

Preferably a mixture of isomers of isothiazolinone is used as bactericide.

Titanium dioxide dispersed at high speed in an aqueous medium is preferably used as the pigment, having the function of colouring the flocculi white.

The calcium carbonate has the function of creating a surface porosity in the flocculi, which allows them to remain soft but consistent.

The ethylene glycol serves to improve the spatulability of the final paint product, increasing the working time.

The first solution is preferably prepared in a receptacle provided with discharge valves and a dispersion device including a blade or helical rotor capable of translation in a vertical direction with a reciprocating action as well as capable of rotation.

The necessary water is introduced into the receptacle first, then the colloid which is dispersed at mid to high speed of the rotor (about 800-1000 rpm) to obtain the complete dissolution thereof.

The anti-foaming agent, the bactericide, and the white pigment in aqueous dispersion are added, and subsequently, the calcium carbonate and ethylene glycol, causing all these to disperse at high speed (about 1500 rpm) for some minutes and then homogenising at low speed (about 200-300 rpm). The preparation of the first solution is thus complete.

The second solution preferably comprises at least the following ingredients:

| | |
|---|---|
| anti-foaming agent | from 0.1 to 3 |
| bactericide | from 0.05 to 2 |
| thickener | from 0.9 to 3 |
| sodium borate | from 0.4 to 8 |
| silicate of sodium, lithium & magnesium | from 1 to 10 |
| hydrated silicon dioxide water | from 0.7 to 3.5 q.s. to 100 parts by weight |

A non-ionic hydrophobically modified hydroxyethylcellulose polymer is preferably used as the thickener.

The sodium borate, which is the preferred compound among the various boron compounds usable for this purpose, is the agent which triggers the reaction between the first and second solution, causing the formation of the flocculi.

The silicate of sodium, lithium and magnesium and the hydrated silicon dioxide give the flocculi the correct opacity and allow them, in the finished product, to slip fluidly under the action of the brush and on the other hand to slip less freely under the action of the spatula.

The second solution can be prepared with equipment similar to that usable for the preparation of the first solution. First, the water is introduced into the receptacle and then the thickening agent, making the rotor turn at mid to low speed (about 300-350 rpm) then the sodium borate, the bactericide and the anti-foaming agent are added in succession.

Then a dispersion at mid to low rotation speed (about 300-400 rpm) is effected for a time sufficient for the action of the thickener to become manifest and the solution to become homogeneous with various solublised components.

Finally, the silicate of sodium, lithium and magnesium and the silicon dioxide are added with the agitation being taken to mid-high speed (about 800-1000 rpm) until dispersion is complete, and then homogenising at low speed (200-300 rpm). The preparation of the second solution is thus complete.

The third solution preferably comprises of at least the following ingredients:

| | |
|---|---|
| sodium acetate | from 0.2 to 6 |
| calcium silicate | from 0.8 to 20 |
| bactericide | from 0.06 to 3 |
| anti-foaming agent | from 0.15 to 2.5 |
| thickener/anti-pouring | from 0.3 to 3.5 |
| polymer dispersed in water | from 35 to 75 |
| coalescing agent | from 0.3 to 7 |
| opacifier | from 0.35 to 15 |
| sodium benzoate | from 0.100 to 1.5 |
| glass balls | from 0.05 to 5.5 |
| water | q.s. to 100 parts by weight |

An aqueous polyurethane solution is preferably used as the thickener/anti-pouring.

The dispersed polymer is, for example, in the form of an aqueous dispersion of about 50% of a copolymer based on butyl and styrene acrylates or an acrylic polymer.

Trimethylpentadiol diisobutyrate is preferably used as the coalescing agent.

Amorphous synthetic silica is preferably used as opacifier.

The balls are preferably hollow, borosilicate glass and have very small dimensions, for example up to 6 µm in diameter. Being of amorphous material they contribute to the slip of the final paint product under the action of the brush and its resistance to mechanical stresses during the application, as well as increasing the washability and inalterability of the painted surface.

The third solution can also be prepared utilising similar equipment to that described previously. In this case, too, the water is first introduced into the receptacle, to which the sodium benzoate, the sodium acetate, the bactericide, the anti-foaming agent and coalescing agent are subsequently added, mixing at low speed (200-300 rpm) until all the ingredients are dissolved.

Subsequently the polymer dispersed in water is introduced into the receptacle, making the rotor turn for a few minutes and then the thickener/anti-pouring, calcium silicate, the opacifier and the hollow glass balls mixing at mid-high speed (800-1000 rpm) until obtaining a homogeneous solution. The preparation of the third solution is thus complete.

To produce the neutral base starting from the above described solutions, the first and second solutions are first mixed under agitation obtaining an intermediate product including white flocculi.

The intermediate product thus obtained is subsequently mixed under slow agitation (about 200-300 rpm) with the third solution obtaining the neutral base in which the white flocculi have been stabilised.

Preferably, to obtain 100 parts by weight of a neutral base, 4-35 parts by weight of the first solution are mixed with 6-53 parts by weight of the second solution and the intermediate product thus obtained is mixed with 10-55 parts by weight of the third solution.

Preferably the coloured base comprises at least the following ingredients:

| | |
|---|---|
| polymer dispersed in water | from 5 to 40 |
| preservative | from 0.1 to 3 |
| anti-foaming agent | from 0.3 to 2 |
| coalescing agent | from 0.8 to 7 |
| glycol | from 1 to 10 |
| thickener | from 0.3 to 2 |
| opacifier | from 1.2 to 5 |
| structuring additive | from 0.8 to 3 |
| pigment | from 1.2 to 25 |
| anti-mildew agent | from 0.1 to 2 |
| wetting agent | from 0.1 to 2.5 |
| dispersant | from 0.1 to 2.5 |
| water | q.s. to 100 parts by water |

The dispersant may, for example, be chosen from the group comprising ammonium salts of a carboxylic acid, linear acrylic polymers, aminomethyl-propynol, sodium salts of polycarboxylic acids and their mixtures.

The wetting agent may, for example, be chosen from the group comprising polyglycol esters of triglyceride, lecithin of soya in water-dispersible form, solutions of a polycarboxylic acid with a silicone polymer, ammoniac salts of a polyacrylic acid of low molecular weight, solutions of an alkylammonium salt of a polyfunctional polymer and their mixtures.

The dispersing agent and the wetting agent cause perfect intermixability of the coloured base with the neutral base, making their mixing possible without the application of high shear forces and needing only simple, possibly manual, agitation. Moreover, they improve the applicability of the final paint product, encouraging perfect wettability of the substrate thus facilitating the task of the applicator.

The thickening agent may, for example, be chosen from the group comprising methyl hydroxyethylcellulose, sodium carboxymethylcellulose, methyl hydroxypropylcellulose, hydroxypropylcellulose, methylcellulose and their mixtures.

The anti-foaming agent may, for example, be chosen for the group comprising paraffin mineral oils in combination with polysiloxane polyethers - hydrophobic copolymers, emulsions of a hydrophobic polyether - polysiloxane copolymer, polyalkoxyethers modified in paraffin oil, emulsions of modified polysiloxane, mixtures of alkylbenzenes, metallic soaps, surfactants and esters and their mixtures.

As preservative it is possible to use, for example, a preservative chosen from the group comprising solutions of derivatives of isothiazolinone, 12-hydroxy-5, 8,11-trioxydodecane, 1,3-bis(hydroxymethyl)urea, 1,6-dihydroxy-2, 5-dioxyhexane, derivatives of isothiazoline chlorate, mixtures of N-0 formals and N-S cyclic ethers, synergistic preparations of mixtures of 1,2-benzoisothiazoline-3-one, aliphatic hemiacetals and isothiazolinone and mixtures thereof.

The opacifying agent may, for example, be chosen from the group constituted by aqueous emulsions based on high-density synthetic wax, synthetic silica, magnesium silicate and their mixtures.

As coalescing agent it is possible to utilise, for example, a coalescent chosen from the group constituted by trimethylpentadiol diisobutyrate, the 2-butoxyethyl ether of acetic acid, 2-butoxyethanol, 2-(2-butoxyethoxy)ethanol, the 2-(2-butoxyethyoxy) ethyl ether of acetic acid and their mixtures.

The polymer dispersed in water is preferably a styrol-acrylic copolymer or acrylic polymer.

The anti-mildew additive may, for example, be chosen from the group constituted by cyclic ethers and N-formal compounds, synergystic combinations of N, S-cyclic ethers, dithiocarbarmates, tributyltin esters, water insoluble derivatives of isothiazolinone and their mixtures.

The structuring additive may, for example, be chosen from the group constituted by acrylic copolymers in aqueous dispersion of low viscosity and polyurethane solutions in aqueous mixture, these latter being the preferred additives.

The glycol, advantageously ethyl or propyl, has the function of retarding filming.

The pigments used may be both organic and inorganic, with high resistance to light, thermal stability and compatibility with the other ingredients.

By way of example one can use as yellow pigment, azo yellow or yellow iron oxide; as blue pigment, the blue of alpha stable phthalocyanine or of sodium aluminium silicate; as violet pigment, dioxazine; as green pigment, phthalocyanine; as red pigment, red iron oxide or azo red; as white pigment, titanium dioxide; and as black pigment, amorphous carbon or iron oxides. Some of these pigments are available on the market in a preliminary dispersed form, whilst other are provided in solid form as micropowders.

Each coloured base can be prepared by pouring water into the steel receptacle which is positioned below a so-called "cowless" rotor provided with means for speed variation.

Under agitation at low speed (about 200 rpm) the anti-foaming agent, the preservative, the thickener, the wetting agent and the dispersant are added until the various components are thickened, and then the opacifier and the pigment.

If this latter is already available in pre-dispersed form it is added by operating at mid to low speed (200-400 rpm) for about 5 minutes; if on the other hand, it is available in solid form, for example, as a micropowder, it is added by operating at high speed (about 1500 rpm) for about 20 to 30 minutes.

At the end of this operation the polymer dispersed in water, the coalescent, the propylene glycol, the structuring additive and the anti-mildew agent are added, thus completing the preparation of the coloured base.

To obtain the final paint product it is sufficient to mix the neutral base with one or more of the coloured bases chosen on the basis of the chromatic tone which it is intended to achieve. Preferably, to obtain 100 parts of weight of paint product, 85 to 99.5 parts by weight of the neutral base are mixed with from 15 to 0.5 parts by weight of coloured base or bases.

This mixing can be achieved by the producer, by any operator involved in the distribution chain of the paint product, or by the final user. Both the neutral base and the coloured bases may in fact be preserved substantially indefinitely with their characteristics being maintained unchanged.

The application of the paint product of the invention is, as already indicated, very simple and does not require any particular precautions or care so that even a non-professional operator is able to perform them, obtaining an excellent final result.

The surface to be decorated is first prepared with a conventional base coat, and then the paint product of the invention is applied with a brush, preferably having natural white bristles.

Finally, some minutes after the application, the painted surface is smoothed, preferably with a spatula.

Because of this smoothing, in fact, after drying, a coat is obtained which is not rough and is free from protuberances and agglomerations. Moreover, in the course of this operation, it is possible to displace the monochromatic white flocculi regrouping them in spots or streaks which animate the design and lead to the creation of more or less clear zones depending on the quantity of coloured base mixed with the white flocculi of the neutral base which are broken up in differentiated manner.

A spatula, for example usable to effect the smoothing, is formed by a U-shape frame the ends of the arms of which are, respectively, fixed to plastic blades of different lengths, for brevity called the long blade and the short blade.

The arms of the frame can assume a first configuration in which they are close to one another and fixed and a second configuration in which one of the arms, after having performed a rotation of about 360°, is adjacent to the opposite side of the other arm, without being fixed to it, in such a way that the two blades are substantially independent of one another.

The blades of the spatula can be used in any of the above mentioned configuration depending on the specific requirements of use.

For example, if it is desired to show up the white streaks given by the flocculi the short blade is utilised with the spatula in the second configuration. In this way the flocculi are pressed and dilated more easily so as to appear more prominently in the final decoration.

On the other hand, if it is desired to have a lesser final white effect the long blade will be used, again with spatula in the second configuration, causing less drag and breakage of the flocculi.

By utilising the spatula instead in the first configuration, the pressure exerted by the applicator on the frame is mediated by one blade on the other fixed to it so that the paint product will have a softer effect with the colour of the coloured base and the white flocculi amalgamating in such a way as to form a less aggressive and contrasting decoration.

In summary, therefore, by varying the configuration of the spatula it is possible to vary in some way the decoration obtained, thus allowing the applicator to express his or her creativity.

There are now provided, by way of non-limitative example, some examples of formulations of neutral and coloured bases usable for the preparation of the paint product of the invention.

### EXAMPLE I - NEUTRAL BASE

| First Solution | |
|---|---|
| water | 92.400 |
| non-ionic colloid (galactomannan) | 1.000 |
| anti-foaming agent (emulsion of silicon polymers) | 0.500 |
| bactericide (mixture of isomers of isothyazolinone) | 0.400 |
| white pigment (pre-dispersed Ti02) | 4.000 |
| calcium carbonate (CaCO₃) | 1.100 |
| ethylene glycol (mono) | 0.600 |
| total parts by weight | 100.000 |

| Second Solution | |
|---|---|
| water | 95.400 |
| anti-foaming agent (emulsion of silicon polymers) | 0.300 |
| bactericide (mixture of isomers of isothiazolinone) | 0.400 |
| thickener (hydroxyethyl cellulose) | 1.000 |
| sodium borate | 1.000 |
| sodium, lithium & magnesium silicate | 1.100 |
| hydrated silicon dioxide | 0.800 |
| total parts by weight | 100.000 |

| Third Solution | |
|---|---|
| Water | 18.200 |
| sodium acetate | 0.300 |
| calcium silicate | 0.900 |
| bactericide(mixture of isomers of isothiazolinone) | 0.400 |
| anti-foaming agent(emulsion of silicon polymers) | 0.400 |
| thickener/anti-pouring (polyurethane solutions in aqueous mixture) | 2.000 |
| polymer dispersed in water (aqueous dispersion of butyl & styrene acrylate) | 70.000 |
| coalescent (trimethylpentadiol diisobutyrate) | 3.000 |
| opacifier (amorphous synthetic silica) | 4.000 |
| sodium benzoate | 0.300 |
| hollow balls of borosilicate glass | 0.500 |
| total parts by weight | 100.000 |

### EXAMPLE II - YELLOW COLOURED BASE

| | |
|---|---|
| water | 45.380 |
| polymer dispersed in water ( styrol-acrylic copolymer in aqueous emulsion) | 31.000 |
| bactericide (mixture of isothiazolinone isomers) | 0.660 |
| anti-foaming agent (emulsions of silicone polymers) | 0.430 |
| coalescent (trimethylpentadiol dissobutyrate) | 1.500 |
| propylene glycol | 4.750 |
| thickener (methylcellulose) | 0.350 |
| opacifier (synthetic silica) | 2.150 |
| structuring additive (polyurethane solution in aqueous mixture) | 0.880 |
| pigment (azoic yellow) | 12.000 |
| anti-mildew agent (water-insoluble derivatives of isothiazolinone) | 0.500 |
| wetting agent (polyglycol esters of triglyceride) | 0.200 |
| dispersant (ammonium salts of a polyacrylic acid) | 0.200 |
| total parts by weight | 100.000 |

### EXAMPLE III - RED COLOURED BASE

| | |
|---|---|
| water | 45.380 |
| polymer dispersed in water (styrol-acrylic copolymer in aqueous emulsion) | 31.000 |
| bactericide (mixture of isothiazolinone isomers) | 0.660 |
| anti-foaming agent (emulsions of silicone polymers) | 0.430 |
| coalescent (fcrimethylpentadiol dissobutyrate) | 1.500 |
| propylene glycol | 4.750 |
| thickener (methyl cellulose) | 0.350 |
| opacifier (synthetic silica) | 2.150 |
| structuring additive (polyurethane solution in aqueous mixture) | 0.880 |
| pigment (red iron oxide) | 12.000 |
| anti-mildew agent (water-insoluble derivatives of isothiazolinone) | 0.500 |
| wetting agent (polyglycol esters of triglyceride) | 0.200 |
| dispersant (ammonium salts of a polyacrylic acid) | 0.200 |
| total parts by weight | 100.000 |

## Claims

1. Process for application of an aqueous phase paint product comprising the following steps:
i) preparing an aqueous neutral base containing white flocculi,
ii) preparing at least one aqueous coloured base,
iii) mixing the aqueous neutral base with at least one aqueous coloured base to obtain an aqueous paint product,
iv) applying by means of a brush the aqueous paint product to a surface to be decorated,
v) subsequently, smoothing the painted surface.

2. Process according to claim 1, wherein said step of preparing said aqueous neutral base provides for mixing a first solution with a second solution so as to give an intermediate product, and subsequently mixing said intermediate product with a third solution.

3. Process according to claim 2, wherein said first solution comprises at least the following ingredients in the quantities indicated in parts by weight:
| | |
|---|---|
| non-ionic colloid | from 0.5 to 13 |
| white pigment | from 0.5 to 25 |
| calcium carbonate | from 1 to 5 |
| ethylene glycol | from 0.5 to 7 |
| water | q.s. to 100 parts |

4. Process according to claim 3, wherein said first solution further comprises at least one of the following ingredients in the quantities indicated in parts by weight:
| | |
|---|---|
| anti-foaming agent | from 0.1 to 2 |
| bactericide | from 0.07 to 1.5. |

5. Process according to claim 2, wherein said second solution comprises at least the following ingredients in the quantities indicated in parts by weight:
| | |
|---|---|
| thickener | from 0.9 to 3 |
| boron compound | from 0.4 to 8 |
| sodium, lithium and magnesium | from 1 to 10 |
| silicate | |
| water | q.s. to 100 parts |

6. Process according to claim 3, wherein said second solution further comprises at least one of the following ingredients in the quantities indicated in parts by weight:
| | |
|---|---|
| anti-foaming agent | from 0.1 to 3 |
| bactericide | from 0.05 to 2 |
| Hydrated silicon dioxide | from 0.7 to 3.5. |

7. Process according to claim 5, wherein said boron compound present in said second solution is sodium borate.

8. Process according to claim 2, wherein said third solution comprises at least the following ingredients in the quantities indicated in parts by weight:
| | |
|---|---|
| sodium acetate | from 0.2 to 6 |
| calcium silicate | from 0.8 to 20 |
| thickener/anti-pouring | from 0.3 to 3.5 |
| Polymer dispersed in water | from 35 to 75 |
| coalescent | from 0.3 to 7 |
| glass balls | from 0.5 to 5.5 |
| water | q.s. to 100 parts |

9. Process according to claim 8, wherein said third solution further comprises at least one of the following ingredients in the quantities indicated in parts by weight:
| | |
|---|---|
| bactericide | from 0.06 to 3 |
| anti-foaming agent | from 0.15 to 2.5 |
| opacifier | from 0.35 to 15 |
| sodium benzoate | from 0.1 to 1.5. |

10. Process according to claim 8, wherein said glass balls of said third solution are hollow balls of borosilicate glass.

11. Process according to claim 2, wherein said coloured base comprises at least the following ingredients in the quantities indicated in parts by weight:
| | |
|---|---|
| polymer dispersed in water | from 5 to 40 |
| coalescent | from 0.8 to 7 |
| thickener | from 0.3 to 2 |
| structuring additive | from 0.8 to 3 |
| pigment | from 1.2 to 25 |
| water | q.s. to 100 parts |

12. Process according to claim 11, wherein said coloured base further comprises at least one of the following ingredients in the quantities indicated in parts by weight:
| | |
|---|---|
| glycol | from 1 to 10, |
| preservative | from 0.1 to 3 |
| anti-foaming agent | from 0.3 to 2 |
| anti-mildew | from 0.1 to 2 |
| opacifier | from 1.2 to 5 |
| Wetting agent | from 0.1 to 2.5 |
| dispersant | from 0.1 to 2.5. |

13. Process according to any one of the claims 2 to 11, comprising mixing from 4 to 35 parts by weight of the first solution with from 6 to 53 parts by weight of the second solution and subsequent mixing of the intermediate product thus obtained with 10 to 55 parts by weight of the third solution to obtain 100 parts by weight of the neutral base.

14. Process according to claim 2, comprising mixing from 85 to 99.5 parts by weight of said neutral base with from 15 a 0.5 parts by weight of said at least one coloured base.

15. Process according to claim 2, comprising mixing from 85 to 99.5 parts by weight of said neutral base with from 15 a 0.5 parts by weight of two or more of said coloured bases different from one another by the nature of the pigment.

16. Process according to claim 1, wherein said smoothing step is performed by means of a spatula.

17. Process according to claim 16, wherein said spatula is made from plastic material.

18. Process according to claim 16 or 17, wherein said spatula has a long blade and a short blade.

19. Process according to claim 18, wherein said long blade and said short blade are fixed to two respective arms of a U-shape frame.

## Patentansprüche

1. Verfahren zum Aufbringen eines in wässriger Phase vorliegenden Anstrichmittelprodukts, umfassend die folgenden Schritte:
i) Herstellen einer wässrigen neutralen Grundlage, die weiße Flöckchen enthält,
ii) Herstellen wenigstens einer wässrigen gefärbten Grundlage,
iii) Mischen der wässrigen neutralen Grundlage mit wenigstens einer wässrigen gefärbten Grundlage, um ein wässriges Anstrichmittelprodukt zu erhalten,
iv) Aufbringen des wässrigen Anstrichmittelprodukts mittels einer Bürste auf eine zu verzierende Oberfläche,
v) anschließend Glätten der angestrichenen Oberfläche.

2. Verfahren nach Anspruch 1, wobei der Schritt des Herstellens der wässrigen neutralen Grundlage das Vermischen einer ersten Lösung mit einer zweiten Lösung, um ein Zwischenprodukt zu ergeben, und anschließend das Vermischen des Zwischenprodukts mit einer dritten Lösung vorsieht.

3. Verfahren nach Anspruch 2, wobei die erste Lösung wenigstens die folgenden Inhaltsstoffe in den in Gewichtsteilen angegebenen Mengen umfasst:
| | |
|---|---|
| nichtionisches Kolloid | 0,5 bis 13 |
| Weißpigment | 0,5 bis 25 |
| Calciumcarbonat | 1 bis 5 |
| Ethylenglycol | 0,5 bis 7 |
| Wasser | q.s. bis 100 Teile |

4. Verfahren nach Anspruch 3, wobei die erste Lösung außerdem wenigstens einen der folgenden Inhaltsstoffe in den in Gewichtsteilen angegebenen Mengen umfasst:
| | |
|---|---|
| Antischaummittel | 0,1 bis 2 |
| Bakterizid | 0,07 bis 1,5. |

5. Verfahren nach Anspruch 2, wobei die zweite Lösung wenigstens die folgenden Inhaltsstoffe in den in Gewichtsteilen angegebenen Mengen umfasst:
| | |
|---|---|
| Verdickungsmittel | 0,9 bis 3 |
| Borverbindung | 0,4 bis 8 |
| Natrium-, Lithium- und Magnesiumsilicat | 1 bis 10 |
| Wasser | q.s. bis 100 Teile. |

6. Verfahren nach Anspruch 3, wobei die zweite Lösung außerdem wenigstens einen der folgenden Inhaltsstoffe in den in Gewichtsteilen angegebenen Mengen umfasst:
| | |
|---|---|
| Antischaummittel | 0,1 bis 3 |
| Bakterizid | 0,05 bis 2 |
| hydratisiertes Siliciumdioxid | 0,7 bis 3,5. |

7. Verfahren nach Anspruch 5, wobei die in der zweiten Lösung vorhandene Borverbindung Natriumborat ist.

8. Verfahren nach Anspruch 2, wobei die dritte Lösung wenigstens die folgenden Inhaltsstoffe in den in Gewichtsteilen angegebenen Mengen umfasst:
| | |
|---|---|
| Natriumacetat | 0,2 bis 6 |
| Calciumsilicat | 0,8 bis 20 |
| Verdickungsmittel/Antiverlaufsmittel | 0,3 bis 3,5 |
| Polymer, dispergiert in Wasser | 35 bis 75 |
| Koaleszenzmittel | 0,3 bis 7 |
| Glaskugeln | 0,5 bis 5,5 |
| Wasser | q.s. bis 100 Teile. |

9. Verfahren nach Anspruch 8, wobei die dritte Lösung außerdem wenigstens einen der folgenden Inhaltsstoffe in den in Gewichtsteilen angegebenen Mengen umfasst:
| | |
|---|---|
| Bakterizid | 0,06 bis 3 |
| Antischaummittel | 0,15 bis 2,5 |
| Trübungsmittel | 0,35 bis 15 |
| Natriumbenzoat | 0,1 bis 1,5. |

10. Verfahren nach Anspruch 8, wobei die Glaskugeln der dritten Lösung Hohlkugeln aus Borosilicatglas sind.

11. Verfahren nach Anspruch 2, wobei die gefärbte Grundlage wenigstens die folgenden Inhaltsstoffe in den in Gewichtsteilen angegebenen Mengen umfasst:
| | |
|---|---|
| Polymer, dispergiert in Wasser | 5 bis 40 |
| Koaleszenzmittel | 0,8 bis 7 |
| Verdickungsmittel | 0,3 bis 2 |
| strukturierendes Additiv | 0,8 bis 3 |
| Pigment | 1,2 bis 25 |
| Wasser | q.s. bis 100 Teile. |

12. Verfahren nach Anspruch 11, wobei die gefärbte Grundlage außerdem wenigstens einen der folgenden Inhaltsstoffe in den in Gewichtsteilen angegebenen Mengen umfasst:
| | |
|---|---|
| Glycol | 1 bis 10 |
| Konservierungsmittel | 0,1 bis 3 |
| Antischaummittel | 0,3 bis 2 |
| Antischimmelmittel | 0,1 bis 2 |
| Trübungsmittel | 1,2 bis 5 |
| Netzmittel | 0,1 bis 2,5 |
| Dispergiermittel | 0,1 bis 2,5. |

13. Verfahren nach einem der Ansprüche 2 bis 11, umfassend das Vermischen von 4 bis 35 Gewichtsteilen der ersten Lösung mit 6 bis 53 Gewichtsteilen der zweiten Lösung und anschließendes Vermischen des so erhaltenen Zwischenprodukts mit 10 bis 55 Gewichtsteilen der dritten Lösung, um 100 Gewichtsteile der neutralen Grundlage zu erhalten.

14. Verfahren nach Anspruch 2, umfassend das Vermischen von 85 bis 99,5 Gewichtsteilen der neutralen Grundlage mit 15 bis 0,5 Gewichtsteilen der wenigstens einen gefärbten Grundlage.

15. Verfahren nach Anspruch 2, umfassend das Vermischen von 85 bis 99,5 Gewichtsteilen der neutralen Grundlage mit 15 bis 0,5 Gewichtsteilen von zwei oder mehr der gefärbten Grundlagen, die sich voneinander durch die Natur des Pigments unterscheiden.

16. Verfahren nach Anspruch 1, wobei der Glättungsschritt mittels eines Spachtels durchgeführt wird.

17. Verfahren nach Anspruch 16, wobei der Spachtel aus Kunststoff gefertigt ist.

18. Verfahren nach Anspruch 16 oder 17, wobei der Spachtel ein langes Blatt und ein kurzes Blatt aufweist.

19. Verfahren nach Anspruch 18, wobei das lange Blatt und das kurze Blatt an zwei Armen eines U-förmigen Rahmens befestigt sind.

## Revendications

1. Procédé d'application d'un produit de peinture en phase aqueuse, comprenant les étapes suivantes :
i) la préparation d'une base neutre aqueuse contenant des flocules blancs,
ii) la préparation d'au moins une base colorée aqueuse,
iii) le mélange de la base neutre aqueuse avec au moins une base colorée aqueuse pour obtenir un produit de peinture aqueux,
iv) l'application au moyen d'une brosse du produit de peinture aqueux à une surface à décorer,
v) ensuite, le lissage de la surface peinte.

2. Procédé selon la revendication 1, dans lequel ladite étape de préparation de ladite base neutre aqueuse propose le mélange d'une première solution avec une seconde solution, afin de donner un produit intermédiaire, et ensuite le mélange dudit produit intermédiaire avec une troisième solution.

3. Procédé selon la revendication 2, dans lequel ladite première solution comprend au moins les ingrédients suivants, dans les quantités indiquées en parties en poids :
| | |
|---|---|
| colloïde non ionique | de 0,5 à 13 |
| pigment blanc | de 0,5 à 25 |
| carbonate de calcium | de 1 à 5 |
| éthylène glycol | de 0,5 à 7 |
| eau | q.s à 100 parties |

4. Procédé selon la revendication 3, dans lequel ladite première solution comprend en outre au moins un élément parmi les ingrédients suivants dans les quantités indiquées en parties en poids :
| | |
|---|---|
| agent anti-mousse | de 0,1 à 2 |
| bactéricide | de 0,07 à 1,5. |

5. Procédé selon la revendication 2, dans lequel ladite seconde solution comprend au moins les ingrédients suivants dans les quantités indiquées en parties en poids :
| | |
|---|---|
| épaississant | de 0,9 à 3 |
| composé de bore | de 0,4 à 8 |
| silicate de sodium, lithium et magnésium | de 1 à 10 |
| eau | q.s à 100 parties |

6. Procédé selon la revendication 3, dans lequel ladite seconde solution comprend en outre au moins un élément parmi les ingrédients suivants, dans les quantités indiquées en parties en poids :
| | |
|---|---|
| agent anti-mousse | de 0,1 à 3 |
| bactéricide | de 0,05 à 2 |
| dioxyde de silicium hydraté | de 0,7 à 3,5. |

7. Procédé selon la revendication 5, dans lequel ledit composé de bore présent dans ladite seconde solution est le borate de sodium.

8. Procédé selon la revendication 2, dans lequel ladite troisième solution comprend au moins les ingrédients suivants, dans les quantités indiquées en parties en poids :
| | |
|---|---|
| acétate de sodium | de 0,2 à 6 |
| silicate de calcium | de 0,8 à 20 |
| épaississant/anti-coulée | de 0,3 à 3,5 |
| polymère dispersé dans l'eau | de 35 à 75 |
| agent de coalescence | de 0,3 à 7 |
| billes de verre | de 0,5 à 5,5 |
| eau | q.s à 100 parties |

9. Procédé selon la revendication 8, dans lequel ladite troisième solution comprend en outre au moins un élément parmi les ingrédients suivants dans les quantités indiquées en parties en poids :
| | |
|---|---|
| bactéricide | de 0,06 à 3 |
| agent anti-mousse | de 0,15 à 2,5 |
| opacifiant | de 0,35 à 15 |
| benzoate de sodium | de 0,1 à 1,5. |

10. Procédé selon la revendication 8, dans lequel lesdites billes de verre de ladite troisième solution sont des billes creuses en verre de borosilicate.

11. Procédé selon la revendication 2, dans lequel ladite base colorée comprend au moins les ingrédients suivants dans les quantités indiquées en parties en poids :
| | |
|---|---|
| polymère dispersé dans l'eau | de 5 à 40 |
| agent de coalescence | de 0,8 à 7 |
| épaississant | de 0,3 à 2 |
| additif structurant | de 0,8 à 3 |
| pigment | de 1,2 à 25 |
| eau | q.s à 100 parties |

12. Procédé selon la revendication 11, dans lequel ladite base colorée comprend en outre au moins un élément parmi les ingrédients suivants dans les quantités indiquées en parties en poids :
| | |
|---|---|
| glycol | de 1 à 10, |
| conservateur | de 0,1 à 3 |
| agent anti-mousse | de 0,3 à 2 |
| anti-moisissure | de 0,1 à 2 |
| opacifiant | de 1,2 à 5 |
| agent mouillant | de 0,1 à 2,5 |
| agent dispersant | de 0,1 à 2,5 |

13. Procédé selon l'une quelconque des revendications 2 à 11, comprenant le mélange de 4 à 35 parties en poids de la première solution avec de 6 à 53 parties en poids de la seconde solution et le mélange successif du produit intermédiaire ainsi obtenu avec 10 à 55 parties en poids de la troisième solution, afin d'obtenir 100 parties en poids de la base neutre.

14. Procédé selon la revendication 2, comprenant le mélange de 85 à 99,5 parties en poids de ladite base neutre avec de 15 à 0,5 parties en poids de ladite au moins une base colorée.

15. Procédé selon la revendication 2, comprenant le mélange de 85 à 99,5 parties en poids de ladite base neutre avec de 15 à 0,5 parties en poids de deux ou plus desdites bases colorées, différentes les unes des autres par la nature du pigment.

16. Procédé selon la revendication 1, dans lequel ladite étape de lissage est réalisée au moyen d'une spatule.

17. Procédé selon la revendication 16, dans lequel ladite spatule est réalisée en matière plastique.

18. Procédé selon les revendications 16 ou 17, dans lequel ladite spatule a une lame longue et une lame courte.

19. Procédé selon la revendication 18, dans lequel ladite lame longue et ladite lame courte sont fixées à deux bras respectifs d'un cadre en forme de U.
